# EUROPEAN PATENT APPLICATION

(11) **EP 4 194 259 A1**
(43) Date of publication of application: **14.06.2023**
(21) Application number: 21855361.8
(22) Date of filing: 28.07.2021
(51) Int. Cl.: B60L 58/40, B60W 10/08

(54) **FCEV ENERGY MANAGEMENT METHOD AND SYSTEM**

(30) Priority: 10.08.2020 CN 202010796546
(71) Applicant: Xiamen Yaxon Networks Co., Ltd., Xiamen, Fujian 361000 (CN)
(72) Inventor: TU, Yankai, Xiamen, Fujian 361000 (CN); CHI, Weibin, Xiamen, Fujian 361000 (CN)
(74) Representative: Hofmann, Andreas
(86) International application number: PCT/CN2021/108931
(87) International publication number: WO 2022/033308

(57) **Abstract**

Provided herein are an FCEV energy management method and system. The method includes: (101) acquiring front road information and front road condition information of a vehicle; (102) predicting a front required power mode according to the front road information and the front road condition information; and (103) adjusting an SOC value of an FCEV auxiliary electric energy module (203) on the basis of the predicted front required power mode. The SOC value of the FCEV auxiliary electric energy module (203) can be adjusted according to the front road information and the front road condition information of the vehicle, thereby keeping the SOC value of the FCEV auxiliary electric energy module (203) at a reasonable level, thus loads of a fuel cell (201) are balanced, and the fuel cell (201) can keep slow change of power output.

## Description

### TECHNICAL FIELD

The present invention relates to the field of vehicle control, in particular to an FCEV energy management method and system.

### BACKGROUND TECHNOLOGY

A fuel cell electric vehicle (FCEV) has the advantages of relatively high fuel utilization ratio, avoidance of pollution and low noise; however, a fuel cell has a soft discharge characteristic and thus is not suitable for high power output; and in addition, the fuel cell has the poor dynamic performance and the slow power output change and is not suitable for the high-power high-current discharge of the vehicle and the constant and frequent power change. Therefore, an auxiliary electric energy source (which is generally a battery and/or a super-capacitor) is generally required to be added to the FCEV for hybrid driving.

In existing hybrid driving, when demand power of a motor of the vehicle changes greatly, an energy control module keeps the output power of the fuel cell still changing at a slower speed, and an auxiliary electric energy module outputs or recovers electric energy for compensation by means of the fast power change. However, an existing FCEV energy management method generally only manages current situations, for example, a minimum threshold value and a maximum threshold value are fixed, when the state of charge (SOC, which is used to reflect the remaining capacity of the battery) of the auxiliary electric energy module is lower than the minimum threshold value, forced charging is carried out, and when the SOC of the auxiliary electric energy module is higher than the maximum threshold value, forced discharging is carried out.

An existing energy management strategy does not consider running situations in front of the vehicle. If the current SOC is too high, when the power of the front motor is suddenly reduced, the excess power of the fuel cell cannot be recovered, resulting in energy waste. If the current SOC is too low, when the power of the front motor is suddenly increased, the deficiency of the power output of the fuel cell cannot be supplemented. In the existing method, only the fixed strategy is used for charging and discharging of the SOC of the auxiliary electric energy module, and the SOC control strategy of the auxiliary electric energy module is not adjusted in a predictive manner according to front road information and front road condition information of the vehicle.

### DISCLOSURE OF THE INVENTION

In order to solve the technical problems in the prior art, the present invention provides an FCEV energy management method and system, which can adjust an SOC value of an auxiliary electric energy module according to front road information and front road condition information of a vehicle, thereby keeping the SOC value of the auxiliary electric energy module at a reasonable level, thus loads of a fuel cell are balanced, and the fuel cell can keep slow change of power output.

The technical solutions used in the present invention to solve the technical problems are as follows: an FCEV energy management method includes acquiring front road information and front road condition information of a vehicle;
predicting a front required power mode according to the front road information and the front road condition information; and
adjusting an SOC value of an FCEV auxiliary electric energy module on the basis of the predicted front required power mode, wherein the auxiliary electric energy module includes a power battery and/or a super-capacitor.

As a preferred solution of the present invention, the predicting the front required power mode according to the front road information and the front road condition information includes:
predicting the front required power mode as a high-power mode if the front road information of the vehicle is a preset long and steep upslope situation;
predicting the front required power mode as a low-power mode if the front road information of the vehicle is a preset long and steep downslope situation;
predicting the front required power mode as a frequent power change mode if the front road information of the vehicle is a preset continuous short-distance upslope and downslope situation, or if the front road condition information of the vehicle is a preset congestion situation; and
otherwise, predicting the front required power mode as a normal power mode.

As a preferred solution of the present invention, the adjusting the SOC value of the FCEV auxiliary electric energy module on the basis of the front required power mode includes:
controlling the SOC value of the FCEV auxiliary electric energy module to be kept near a median value of the allowable maximum SOC value if the front required power mode is the frequent power change mode;
controlling the SOC value of the FCEV auxiliary electric energy module to be kept near the allowable maximum SOC value if the front required power mode is the high-power mode; and
controlling the SOC value of the FCEV auxiliary electric energy module to be kept near an allowable minimum SOC value if the front required power mode is the low-power mode.

As a preferred solution of the present invention, the adjusting the SOC value of the FCEV auxiliary electric energy module on the basis of the front required power mode further includes:
controlling the SOC value of the FCEV auxiliary electric energy module to be kept near the allowable minimum SOC value if the front road information of the vehicle is the preset long and steep downslope situation and the front road condition information of the vehicle is the preset congestion situation, that is, if the front required power mode is both the low-power mode and the frequent power change mode; and
controlling the SOC value of the FCEV auxiliary electric energy module to be kept near the median value of the allowable maximum SOC value if the front road information of the vehicle is the preset long and steep upslope situation and the front road condition information of the vehicle is the preset congestion situation, that is, if the front required power mode is both the high-power mode and the frequent power change mode.

As a preferred solution of the present invention, the adjusting the SOC value of the FCEV auxiliary electric energy module on the basis of the front required power mode further includes:
comparing the SOC value of the FCEV auxiliary electric energy module with a preset first threshold value and a preset second threshold value in real time if the front required power mode is the normal power mode; controlling the FCEV auxiliary electric energy module to be discharged if the SOC value of the FCEV auxiliary electric energy module is greater than the first threshold value; and controlling the FCEV auxiliary electric energy module to be charged if the SOC value of the FCEV auxiliary electric energy module is less than the second threshold value.

As a preferred solution of the present invention, the controlling the SOC value of the FCEV auxiliary electric energy module to be kept near the median value of the allowable maximum SOC value specifically includes: controlling the SOC value of the FCEV auxiliary electric energy module to be kept within a range of +/-10% of the median value of the allowable maximum SOC value.

As a preferred solution of the present invention, the controlling the SOC value of the FCEV auxiliary electric energy module to be kept near the allowable maximum SOC value specifically includes: controlling the SOC value of the FCEV auxiliary electric energy module to be kept within a range between the allowable maximum SOC value and the allowable maximum SOC value floating down by 10%.

As a preferred solution of the present invention, the controlling the SOC value of the FCEV auxiliary electric energy module to be kept near the allowable minimum SOC value specifically includes: controlling the SOC value of the FCEV auxiliary electric energy module to be kept within a range between the allowable minimum SOC value and the allowable minimum SOC value floating up by 10%.

An FCEV energy management system according to the present invention includes:
a fuel cell configured to output energy for vehicle use;
an auxiliary electric energy module configured to recover the excess energy output by the fuel cell and used to release energy for vehicle use when the output energy of the fuel cell cannot meet vehicle demand;
a front road condition acquisition module configured to acquire front road information and front road condition information of a vehicle; and
an energy control module connected to the fuel cell to provide the output energy of the fuel cell for the vehicle and/or the auxiliary electric energy module, connected to the auxiliary electric energy module to adjust output energy or recovered energy of the auxiliary electric energy module so as to adjust an SOC value of the auxiliary electric energy module, and connected to the front road condition acquisition module to predict a front required power mode according to the front road information and the front road condition information.

As a preferred solution of the present invention, the auxiliary electric energy module includes a power battery and/or a super-capacitor; the energy control module is achieved by means of a vehicle control unit; the front road condition acquisition module is achieved by means of an electric horizon system based on an ADAS map; and the front required power mode includes a high-power mode, a low-power mode, a frequent power change mode and a normal power mode.

By means of the above technical solutions, compared with the prior art, the present invention has the following beneficial effects:
the present invention can adjust the SOC value of the FCEV auxiliary electric energy module according to the front road information and the front road condition information of the vehicle, thereby keeping the SOC value of the FCEV auxiliary electric energy module at the reasonable level, thus loads of the fuel cell are balanced, and the fuel cell can keep slow change of power output;
the energy control module of the present invention controls the fuel cell to charge the auxiliary electric energy module and recover excess output energy of the fuel cell when demand power of a motor of the vehicle is lower than the maximum output power of the fuel cell; and at the same time, the energy control module controls the auxiliary electric energy module to release energy and supplement insufficient output energy of the fuel cell when the demand power of the motor of the vehicle is higher than the maximum output power of the fuel cell.

### BRIEF DESCRIPTION OF THE DRAWINGS

FIG. 1 is a flow chart of a method of the present invention; and
FIG. 2 is a structure diagram of a system of the present invention.

### DESCRIPTION OF EMBODIMENTS

The technical solutions of the present invention are described in detail below in conjunction with the accompanying drawings and embodiments.

### Embodiments

The execution body for a method of this embodiment is an energy control module. The energy control module is control equipment taking a micro control unit (MCU) as a core and can be implemented by means of a vehicle control unit (VCU). An executive program and/or database program for the method of this embodiment can be installed in the energy control module, and is not specifically defined in the present invention.

It should be noted that step marks involved in claims and the specification of the present application are only used to make the document clearer, and the sequence of the steps can be correspondingly adjusted according to requirements during specific implementation.

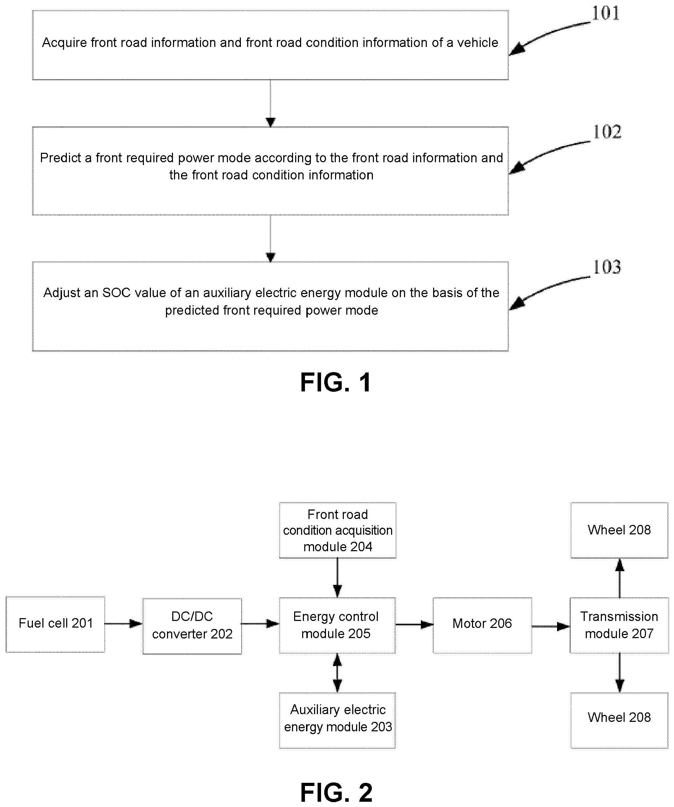

Referring to FIG. 1, an FCEV energy management method according to the present invention includes:
S101: Acquire front road information and front road condition information of a vehicle.
S102: Predict a front required power mode according to the front road information and the front road condition information.
S103: Adjust an SOC value of an FCEV auxiliary electric energy module on the basis of the predicted front required power mode. The FCEV auxiliary electric energy module includes a power battery and/or a super-capacitor.

Further, the predicting the front required power mode according to the front road information and the front road condition information includes:
predict the front required power mode as a high-power mode if the front road information of the vehicle is a preset long and steep upslope situation;
predict the front required power mode as a low-power mode if the front road information of the vehicle is a preset long and steep downslope situation;
predict the front required power mode as a frequent power change mode if the front road information of the vehicle is a preset continuous short-distance upslope and downslope situation, or if the front road condition information of the vehicle is a preset congestion situation; and
predict the front required power mode as a normal power mode if the front road information of the vehicle is not the long and steep upslope situation, the long and steep downslope situation or the continuous short-distance upslope and downslope situation and if the front road condition information of the vehicle is not the congestion situation.

Specifically, long and steep upslope and downslope classification in the front road information can refer to the national Technical Standard of Highway Engineering. For roads of different grades, slopes that are greater than the specified maximum gentle longitudinal slope are steep slopes.

The slopes can also be defined by a user according to the actual application requirements of the user, and the user defining rules are as follows:
if the average gradient is greater than or equal to 3% and less than 4% and the continuous downslope length is greater than 5 km, or the average gradient is greater than or equal to 4% and less than 5% and the continuous downslope length is greater than 4 km, or the average gradient is greater than or equal to 5% and the continuous downslope length is greater than 3 km, the slope is defined as a long downslope, and the front required power mode is predicted as the low-power mode;
if the average gradient is greater than or equal to 3% and less than 4% and the continuous upslope length is greater than 5 km, or the average gradient is greater than or equal to 4% and less than 5% and the continuous upslope length is greater than 4 km, or the average gradient is greater than or equal to 5% and the continuous upslope length is greater than 3 km, the slope is defined as a long upslope, and the front required power mode is predicted as the high-power mode; and
if the average gradient is greater than or equal to 3% and less than 4% and the continuous upslope or downslope length is less than 500 m, or the average gradient is greater than or equal to 4% and less than 5% and the continuous upslope or downslope length is less than 400 m, or the average gradient is greater than or equal to 5% and the continuous upslope or downslope length is less than 300 km, the slope is a short slope, when a plurality of continuous short slopes (the specific number can be defined by the user) appear and upslopes and downslopes appear alternately, the slopes are defined as continuous short-distance upslopes and downslopes, and the front required power mode is predicted as the frequent power change mode.

Further, the adjusting the SOC value of the FCEV auxiliary electric energy module on the basis of the predicted front required power mode includes:
control the SOC value of the FCEV auxiliary electric energy module to be kept near a median value of the allowable maximum SOC value if the front required power mode is the frequent power change mode;
control the SOC value of the FCEV auxiliary electric energy module to be kept near the allowable maximum SOC value if the front required power mode is the high-power mode; and
control the SOC value of the FCEV auxiliary electric energy module to be kept near the allowable minimum SOC value if the front required power mode is the low-power mode.

If the front required power mode is the frequent power change mode, the SOC value of the FCEV auxiliary electric energy module is controlled to be kept near the median value of the allowable maximum SOC value, thus when the demand power of the motor of the vehicle increases suddenly, the auxiliary electric energy module can provide high power for the instantaneous change, and meanwhile, when the demand power of the motor of the vehicle decreases suddenly, the auxiliary electric energy module has an enough SOC space to recover the excess power output by the fuel cell. Under this strategy, if the SOC value is too high before entering a front predicted power road section, part of the electric energy is released in advance to drive the vehicle until the SOC value is close to the median value of the maximum SOC value; and if the SOC value is too low, the output of the fuel cell is increased in advance to charge the auxiliary electric energy module until the SOC value is close to the median value of the maximum SOC value.
the controlling the SOC value of the FCEV auxiliary electric energy module to be kept near the median value of the allowable maximum SOC value specifically includes:
control the SOC value of the FCEV auxiliary electric energy module to be kept within the range of +/-10% of the median value of the allowable maximum SOC value. If the allowable maximum SOC value is 95%, the SOC value of the FCEV auxiliary electric energy module is controlled to be kept within a range of 0.95*0.5*0.9-0.95*0.5*1.1.

If the front required power mode is the high-power mode, the output of the fuel cell is increased in advance to charge the auxiliary electric energy module until the SOC value reaches and is kept near the allowable maximum SOC value. Thus, when the power demand is increased in the future (ahead), the relatively much energy stored by the auxiliary electric energy module can output high power for a longer time, which can compensate the fuel cell and make up for the defects that the power of the fuel cell cannot become higher immediately and the high-power output cannot be maintained.

The controlling the SOC value of the FCEV auxiliary electric energy module to be kept near the allowable maximum SOC value specifically includes:
control the SOC value of the FCEV auxiliary electric energy module to be kept within the range between the allowable maximum SOC value and the allowable maximum SOC value floating down by 10%. If the allowable maximum SOC value is 95%, the SOC value of the FCEV auxiliary electric energy module is controlled to be kept within a range of 0.95*0.9-0.95*1.0.

If the front required power mode is the low-power mode, part of the electric energy of the auxiliary electric energy module is released in advance to drive the vehicle, the SOC value is reduced and kept near the allowable minimum SOC value in advance, thus the relatively large electric energy storage space is reserved, and when the power demand is reduced in the future (ahead), the energy output by the fuel cell and the braking energy can be recovered as much as possible so as to make up for the defect that the power of the fuel cell cannot be reduced immediately.

The controlling the SOC value of the FCEV auxiliary electric energy module to be kept near the allowable minimum SOC value specifically includes:
control the SOC value of the FCEV auxiliary electric energy module to be kept within the range between the allowable minimum SOC value and the allowable minimum SOC value floating up by 10%. If the allowable minimum SOC value is 15%, the SOC value of the auxiliary electric energy module is controlled to be kept within a range of 0.15*1.0-0.15*1.1.

By means of the adjustment method for the SOC value of the FCEV auxiliary electric energy module, the FCEV auxiliary electric energy module has the relatively large space to continuously recover the energy output by the fuel cell and the braking energy. If the front mode is the normal power mode, the adjustment method of fixed threshold values is used, thus the FCEV can have the relatively high overall energy economy, and the method specifically includes:
compare the SOC value of the FCEV auxiliary electric energy module with a preset first threshold value and a preset second threshold value in real time if the front required power mode is the normal power mode; control the FCEV auxiliary electric energy module to be discharged if the SOC value of the FCEV auxiliary electric energy module is greater than the first threshold value; and control the FCEV auxiliary electric energy module to be charged if the SOC value of the FCEV auxiliary electric energy module is less than the second threshold value.

Further, the high-power mode may overlap with the frequent power change mode when the front road information of the vehicle is the preset long and steep upslope situation and the front road condition information of the vehicle is the congestion situation. Similarly, the low-power mode may overlap with the frequent power change mode when the front road information of the vehicle is the preset long and steep downslope situation and the front road condition information of the vehicle is the congestion situation. Considering the economy, when the frequent power change mode overlaps with the low-power mode, that is, there is a congested long and steep downslope road section ahead, the SOC value of the auxiliary electric energy module is adjusted as per the low-power mode; and when the frequent power change mode overlaps with the high-power mode, that is, there is a congested long and steep upslope road section ahead, the SOC value of the auxiliary electric energy module is adjusted as per the frequent power change mode.

Specifically, the adjustment method includes:
control the SOC value of the FCEV auxiliary electric energy module to be kept near the allowable minimum SOC value if the front road information of the vehicle is the preset long and steep downslope situation and the front road condition information of the vehicle is the preset congestion situation, that is, if the front required power mode is both the low-power mode and the frequent power change mode; and
control the SOC value of the FCEV auxiliary electric energy module to be kept near the median value of the allowable maximum SOC value if the front road information of the vehicle is the preset long and steep upslope situation and the front road condition information of the vehicle is the preset congestion situation, that is, if the front required power mode is both the high-power mode and the frequent power change mode.

Referring to FIG. 2, an FCEV energy management system according to the present invention includes:
a fuel cell 201 configured to output energy for vehicle use;
an auxiliary electric energy module 203 (equivalent to an FCEV auxiliary electric energy module) configured to recover the excess energy output by the fuel cell 201 and used to release energy for vehicle use when the output energy of the fuel cell 201 cannot meet vehicle demand;
a front road condition acquisition module 204 configured to acquire front road information and front road condition information of a vehicle; and
an energy control module 205 connected to the fuel cell 201 to provide the output energy of the fuel cell 201 for the vehicle and/or the auxiliary electric energy module 203, connected to the auxiliary electric energy module 203 to adjust output energy or recovered energy of the auxiliary electric energy module 203 so as to adjust an SOC value of the auxiliary electric energy module 203, and connected to the front road condition acquisition module 204 to predict a front required power mode according to the front road information and the front road condition information.

Specifically, the power output by the auxiliary electric energy module 203 is the difference between power required by a motor 206 and the power output by the fuel cell 201 by means of a DC/DC converter 202, and power output by the motor 206 changes with driving operation signals. The energy control module 205 adjusts the power output by the auxiliary electric energy module 203 or recover power to balance loads of the fuel cell 201, and thus the fuel cell 201 can keep slow change of power output. The energy control module 205 controls the fuel cell 201 to charge the auxiliary electric energy module 203 and recover the excess output energy of the fuel cell 201 when the demand power of the motor 206 is lower than the maximum output power of the fuel cell 201; and the energy control module controls the auxiliary electric energy module 203 to release energy and supplement insufficient output energy of the fuel cell 201 when the demand power of the motor 206 is higher than the maximum output power of the fuel cell 201. Further, the motor 206 drives a transmission module 207 of the vehicle, and the transmission module 207 drives wheels 208 to run.

In this embodiment, the auxiliary electric energy module 203 includes a power battery and/or a super-capacitor; the energy control module 205 is achieved by means of a vehicle control unit; and the front road condition acquisition module 204 is achieved by means of an electric horizon system.

Specifically, the front road information and the front road condition information are provided by means of the electric horizon system based on an ADAS map, and the front required power mode can be predicted according to map information provided by an ADAS and includes a high-power mode, a low-power mode, a frequent power change mode and a normal power mode that are divided in correspondence to the map information provided by the ADAS. The FCEV auxiliary electric energy module is adjusted on the basis of the front required power mode.

In this embodiment, an electric horizon is combined with the VCU, the electric horizon sends the front road information to the VCU by means of a vehicle bus such as the CAN or the Ethernet, and the VCU controls the SOC value of the auxiliary electric energy module 203 to be kept at a reasonable level according to the front road information and road condition information.

A specific adjustment method for the SOC value of the auxiliary electric energy module by the FCEV energy management system is the same as the FCEV energy management method and will not be repeated in this embodiment.

The foregoing are merely preferred embodiments of the present invention and are not intended to limit the present invention in any way. Although the present invention has been described with reference to the preferred embodiments, it is not intended to be limited thereto. Any person skilled in the art, without departing from the scope of the technical solutions of the present invention, may make many possible variations and modifications to the technical solutions of the present invention based on the technical content disclosed above, or modify it to equivalent embodiments. Therefore, any simple modifications, equivalent changes and modifications of the above embodiments in accordance with the technical substance of the present invention without departing from the technical solutions of the present invention shall fall within the scope of protection of the technical solutions of the present invention.

### Industrial applicability

According to the FCEV energy management method and system of the present invention, an electric horizon is combined with the VCU, the electric horizon sends the front road information to the VCU by means of a vehicle bus such as the CAN or the Ethernet, the VCU controls the SOC value of the FCEV auxiliary electric energy module to be kept at the reasonable level according to the front road information and road condition information, thus loads of the fuel cell are balanced, and the fuel cell can keep slow change of power output. The electric horizon system is a database system that can provide accurate real-time information about the road ahead for the vehicle, and various dynamic data, such as speed limiting information, traffic lights, construction sites and obstacles of the road ahead, and actual road data can be acquired by means of the electric horizon system. The present invention is easy to implement in industry by means of the electric horizon system and the VCU, and various components such as the VCU, the vehicle bus, the cell, the super-capacitor, the motor and the fuel cell are also easy to process in industry.

## Claims

1. An FCEV energy management method, comprising:
acquiring front road information and front road condition information of a vehicle;
predicting a front required power mode according to the front road information and the front road condition information; and
adjusting an SOC value of an FCEV auxiliary electric energy module on the basis of the front required power mode.

2. The method according to claim 1, wherein the predicting the front required power mode according to the front road information and the front road condition information comprises:
predicting the front required power mode as a high-power mode if the front road information of the vehicle is a preset long and steep upslope situation;
predicting the front required power mode as a low-power mode if the front road information of the vehicle is a preset long and steep downslope situation;
predicting the front required power mode as a frequent power change mode if the front road information of the vehicle is a preset continuous short-distance upslope and downslope situation, or if the front road condition information of the vehicle is a preset congestion situation; and
otherwise, predicting the front required power mode as a normal power mode.

3. The method according to claim 2, wherein the adjusting the SOC value of the FCEV auxiliary electric energy module on the basis of the front required power mode comprises:
controlling the SOC value of the FCEV auxiliary electric energy module to be kept near a median value of an allowable maximum SOC value if the front required power mode is the frequent power change mode;
controlling the SOC value of the FCEV auxiliary electric energy module to be kept near the allowable maximum SOC value if the front required power mode is the high-power mode; and
controlling the SOC value of the FCEV auxiliary electric energy module to be kept near the allowable minimum SOC value if the front required power mode is the low-power mode.

4. The method according to claim 3, wherein the adjusting the SOC value of the FCEV auxiliary electric energy module on the basis of the front required power mode further comprises:
controlling the SOC value of the FCEV auxiliary electric energy module to be kept near the allowable minimum SOC value if the front road information of the vehicle is the preset long and steep downslope situation and the front road condition information of the vehicle is the preset congestion situation, that is, if the front required power mode is both the low-power mode and the frequent power change mode; and
controlling the SOC value of the FCEV auxiliary electric energy module to be kept near the median value of the allowable maximum SOC value if the front road information of the vehicle is the preset long and steep upslope situation and the front road condition information of the vehicle is the preset congestion situation, that is, if the front required power mode is both the high-power mode and the frequent power change mode.

5. The method according to claim 3, wherein said adjusting the SOC value of the FCEV auxiliary electric energy module on the basis of the front required power mode further comprises:
comparing the SOC value of the FCEV auxiliary electric energy module with a preset first threshold value and a preset second threshold value in real time if the front required power mode is the normal power mode; controlling the FCEV auxiliary electric energy module to be discharged if the SOC value of the FCEV auxiliary electric energy module is greater than the first threshold value; and controlling the FCEV auxiliary electric energy module to be charged if the SOC value of the FCEV auxiliary electric energy module is less than the second threshold value.

6. The method according to claim 3 or 4 or 5, wherein the controlling the SOC value of the FCEV auxiliary electric energy module to be kept near the median value of the allowable maximum SOC value specifically comprises: controlling the SOC value of the FCEV auxiliary electric energy module to be kept within a range of +/-10% of the median value of the allowable maximum SOC value.

7. The method according to claim 3 or 4 or 5, wherein the controlling the SOC value of the FCEV auxiliary electric energy module to be kept near the allowable maximum SOC value specifically comprises: controlling the SOC value of the FCEV auxiliary electric energy module to be kept within a range between the allowable maximum SOC value and the allowable maximum SOC value floating down by 10%.

8. The method according to claim 3 or 4 or 5, wherein the controlling the SOC value of the FCEV auxiliary electric energy module to be kept near the allowable minimum SOC value specifically comprises: controlling the SOC value of the FCEV auxiliary electric energy module to be kept within a range between the allowable minimum SOC value and the allowable minimum SOC value floating up by 10%.

9. An FCEV energy management system, comprising:
a fuel cell configured to output energy for vehicle use;
an auxiliary electric energy module configured to recover the excess energy output by the fuel cell and used to release energy for vehicle use when the output energy of the fuel cell cannot meet vehicle demand;
a front road condition acquisition module configured to acquire front road information and front road condition information of a vehicle; and
an energy control module connected to the fuel cell to provide the output energy of the fuel cell for the vehicle and/or the auxiliary electric energy module, connected to the auxiliary electric energy module to adjust output energy or recovered energy of the auxiliary electric energy module so as to adjust an SOC value of the auxiliary electric energy module, and connected to the front road condition acquisition module to predict a front required power mode according to the front road information and the front road condition information.

10. The system according to claim 9, wherein the auxiliary electric energy module comprises a power battery and/or a super-capacitor; the energy control module is achieved by means of a vehicle control unit; the front road condition acquisition module is achieved by means of an electric horizon system based on an ADAS map; and the front required power mode comprises a high-power mode, a low-power mode, a frequent power change mode and a normal power mode.
